# FASCICULE DE BREVET EUROPEEN

(11) **EP 2 788 255 B1**
(45) Date de publication et mention de la délivrance du brevet: **08.06.2016**
(21) Numéro de dépôt: 12798712.1
(22) Date de dépôt: 06.12.2012
(51) Int. Cl.: B64C 25/02, B64C 25/34, C03C 27/00, C03C 27/04, H01J 5/20, H01J 5/44, H01J 29/92, B23K 101/00

(54) **TIGE D'ATTERRISSEUR POUR AERONEF**
STREBE FÜR DAS FAHRWERK EINES FLUGZEUGS
AIRCRAFT LANDING GEAR STRUT

(30) Priorité: 07.12.2011 FR 1161292
(43) Date de publication de la demande: 15.10.2014
(73) Titulaire: Messier-Bugatti-Dowty, 78140 Vélizy-Villacoublay (FR)
(72) Inventeur: HITIER, Pascal, F-78140 Velizy-Villacoublay (FR)
(74) Mandataire: Parzy, Benjamin Alain
(86) Numéro de dépôt international: PCT/EP2012/074712
(87) Numéro de publication internationale: WO 2013/083732

(56) Documents cités:
- GB-A- 2 474 686
- US-A- 2 440 068
- US-A- 2 733 503
- US-A- 5 547 148

## Description

### ARRIERE PLAN DE L'INVENTION

Les atterrisseurs d'aéronefs comportent généralement un caisson relié à l'aéronef et dans lequel est placé un amortisseur. L'atterrisseur comporte également une tige d'atterrisseur prévue pour pénétrer partiellement dans le caisson et y coulisser. Cette tige est reliée d'une part à l'amortisseur et d'autre part à un mécanisme porte essieux sur lequel sont montées des roues de roulement de l'aéronef sur le sol.

US 2733503 A divulgue une tige comportant les caractéristiques du préambule de la revendication 1.

La tige a donc une fonction de lien mécanique entre les roues et l'aéronef pour en permettre le roulement au sol. La tige d'atterrisseur est par conséquent un organe mécanique particulièrement sollicité lors de l'atterrissage car elle doit supporter l'impact d'atterrissage, porter l'aéronef lors du roulement sur le sol et transmettre les efforts de freinage des roues sur le sol pour permettre l'arrêt de l'aéronef. Par conséquent la tige d'atterrisseur doit accepter des efforts de compression dans le sens de l'axe de tige et des efforts de flexion par exemple lors du freinage.

Pour résister à de tels efforts, les tiges d'atterrisseurs sont généralement réalisées par forgeage d'une pièce pleine en forme de T ou en forme de Y. Le forgeage permet d'améliorer la résistance mécanique de la tige. Après forgeage, la tige en T ou en Y est alésée selon un axe principal de la forme en T ou en Y de manière à former une partie tubulaire apte à recevoir une portion de l'amortisseur télescopique et permettant un allégement de la tige. L'alésage s'étend parfois sur plus d'un mètre dans la pièce forgée, ce qui allonge le temps de production. Cette pièce forgée et allésée est particulièrement couteuse et complexe à réaliser. Sa réalisation impose d'avoir des moyens de forgeage de taille importante. Par exemple une tige d'atterrisseur d'un aéronef de type AIRBUS A320 ® implique de réaliser une pièce forgée d'environ 1,50 mètre de long et d'environ 1.20 mètre de large. Une telle pièce ne peut être forgée qu'avec des moyens de forge rares et donc couteux.

### OBJET DE L'INVENTION

Un objet de la présente invention est donc de réaliser une tige d'atterrisseur de coût réduit.

### RESUME DE L'INVENTION

Afin de répondre à cet objet, il est proposé une tige d'atterrisseur pour aéronef (Revendication 1), comportant une partie tubulaire pour recevoir un amortisseur et une partie porte essieux située en bout de la partie tubulaire et adaptée à recevoir un mécanisme de support de roues d'atterrisseur. Cette tige est essentiellement caractérisée en ce que la partie tubulaire et la partie porte essieux sont réalisées en des matériaux métalliques distincts l'un de l'autre, la partie tubulaire étant en un premier matériau métallique et la partie porte essieux étant en un second matériau métallique, la partie tubulaire et la partie porte essieux étant reliées entre elles par au moins une soudure.

Il y a un grand nombre d'avantages à réaliser une tige d'atterrisseur en soudant une partie tubulaire, par exemple réalisée par extrusion, avec une partie porte essieux en un autre matériau tel qu'un matériau forgé ou un matériau moulé et compacté iso statiquement à chaud. En particulier, on n'est plus obligé de réaliser une perforation de la tige en T pour former la partie tubulaire. Par ailleurs au lieu de former une tige d'une seule pièce, celle-ci est en plusieurs parties réalisées séparément les unes des autres avant d'être assemblées par soudure. Grâce à l'invention, les moyens de production utilisés pour produire la tige, tels que des moyens de matriçage ou de compaction iso statique à chaud peuvent être de taille inférieure à ce qu'ils seraient si la tige était en une seule pièce.

En particulier, compte tenu des contraintes mécaniques locales devant être supportées par la tige, il est obligatoire que la partie porte essieux soit particulièrement résistante. Grâce à l'invention, il n'est plus obligatoire que la partie tubulaire de la tige soit en un matériau présentant les mêmes caractéristiques de résistance que le matériau résistant de la partie porte essieux. Ainsi, si pour lui conférer une résistance mécanique importante, la partie porte essieux doit être forgée ou réalisée par compaction isostatique à chaud d'une pièce moulée, ces opérations de forgeage ou de compaction à chaud peuvent être limitées au strict nécessaire, c'est-à-dire à la seule partie de la tige destinée à recevoir le mécanisme de support de roues, sans concerner la partie tubulaire. La partie tubulaire n'est donc pas forcément forgée ou compactée à chaud. En l'occurrence, comme on le verra par la suite la partie tubulaire est préférentiellement produite par extrusion afin d'orienter ses fibres de manière à améliorer la résistance à la flexion de la tige selon l'invention. Par conséquent, cette partie tubulaire peut être produite avec des tubes profilés standards simplement découpés à longueur.

Pour répondre à l'objet précité, il est aussi proposé selon l'invention, un procédé de fabrication d'une tige d'atterrisseur pour aéronef (Revendication 11), dans lequel, par une opération de soudure on relie entre elles :
- une partie tubulaire adaptée pour recevoir un amortisseur de l'atterrisseur ; avec
- une partie porte essieux adaptée à recevoir un mécanisme de support de roues d'atterrisseur,

la partie tubulaire et la partie porte essieux étant respectivement réalisées en des premier et second matériaux métalliques respectivement distincts l'un de l'autre et la partie porte essieux étant préférentiellement réalisée par forgeage ou compaction à chaud d'une pièce moulée.

L'invention porte également sur un atterrisseur comportant une tige d'atterrisseur telle que celle précitée et/ou celle réalisée conformément au procédé de l'invention.

L'invention porte enfin sur un aéronef caractérisé en ce qu'il comporte au moins un atterrisseur selon l'invention.

La fabrication de la partie porte essieux d'une tige d'atterrisseur selon l'invention se fait par des opérations de forgeage, telles que de l'estampage ou du matriçage ou une opération de moulage suivie d'une compaction à chaud. Même si la partie tubulaire peut aussi être réalisée par forgeage, on préfère généralement la réaliser par extrusion.

Pour la compréhension de la présente invention l'extrusion n'est pas considérée comme une opération de forge, la forge consistant à matricer et/ou estamper et/ou frapper et non à extruder.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels :
- les figures 1a et 1b présentent la réalisation d'une tige d'atterrisseur en Y selon un premier mode de réalisation de l'invention ;
- les figures 2a et 2b présentent la réalisation d'une tige d'atterrisseur en T selon un second mode alternatif de réalisation de l'invention ;
- les figures 3a et 3b présentent la réalisation d'une tige d'atterrisseur en T selon l'invention suivant un mode alternatif à celui de la figure 2b (Sur ces figures 1a, 1b, 2a, 2b, 3a, 3b la tige et ses constituants sont vus en sections longitudinales selon l'axe X-X. Les figures 1a, 2a, 3a montrent les pièces formant les tiges avant assemblage et les figures 1b, 2b, 3b montrent les tiges respectives après assemblage).

### DESCRIPTION DETAILLEE DE L'INVENTION

Comme indiqué précédemment, l'invention consiste essentiellement en une tige d'atterrisseur 1 destinée à coulisser au moins partiellement dans un caisson d'atterrisseur (non représenté sur les figures).

Cette tige est réalisée en soudant, via une soudure 4 préférentiellement annulaire, une partie porte essieux 2 réalisée par forgeage ou moulage avec compaction à chaud, avec une partie tubulaire 3 ou tube 3.

Le forgeage comporte au moins une opération de matriçage.

La compaction ou compactage à chaud d'une pièce moulée (aussi connue sous l'acronyme HIP pour Hot isostatic pressing) consiste à mouler une pièce métallique aux formes requises et à la placer dans l'enceinte d'un four où la pression ambiante est de plusieurs centaines de Bars, préférentiellement comprise entre 1000 et 1500 Bars et où la température est importante sans excéder la température de fusion du matériau métallique formant la pièce. Dans ces conditions, les porosités éventuelles de la pièce moulée disparaissent en partie, améliorant ainsi les caractéristiques mécaniques de la pièce moulée de façon sensiblement équivalente à ce qu'elles seraient si elle était obtenue par forgeage. Compte tenu des conditions de pression et température internes à l'enceinte du four, cette technique n'est utilisable que pour des pièces de dimensions réduites. Grâce à l'invention, la ou les parties non assemblées de la tige, comme la partie porte essieux 2a, 2d, sont de dimensions compatibles avec les enceintes de fours de compaction à chaud, permettant ainsi de réaliser des portions de tiges d'atterrisseur avec des fours pressurisés standards. On note qu'il peut être avantageux de mouler une pièce plutôt que de la forger car le moule permet d'obtenir directement des formes requises que l'on ne peut obtenir directement par forgeage.

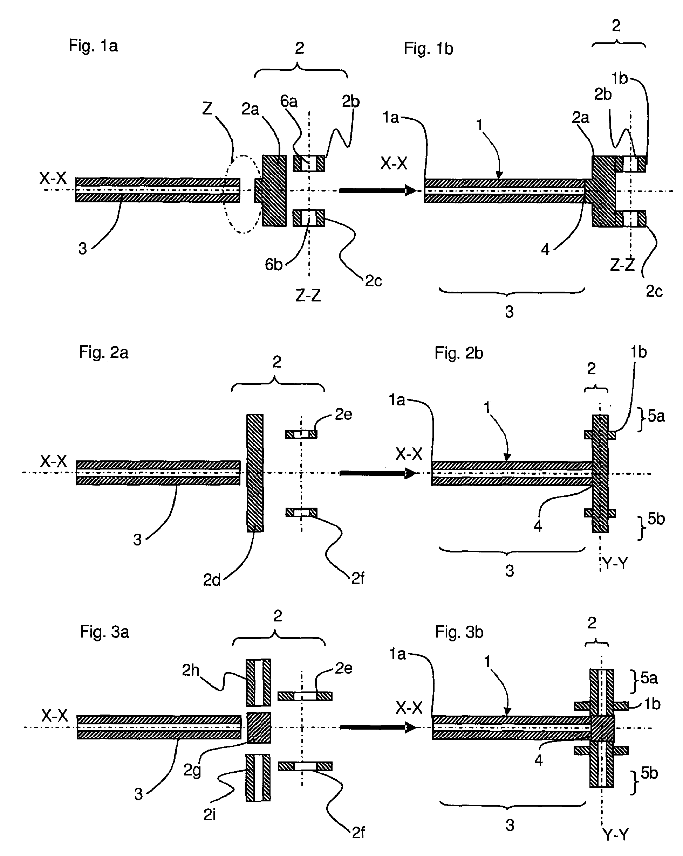

Comme on le voit sur les figures 1b, 2b, 3b, la tige d'atterrisseur 1 s'étend selon un axe longitudinal X-X et comprend des première et seconde extrémités 1a, 1b distantes l'une de l'autre.

La partie tubulaire 3 s'étend entre la soudure 4 et la première extrémité la.

La partie porte essieux 2 s'étend entre cette soudure 4 et la seconde extrémité 1b.

L'atterrisseur comporte un amortisseur (non représenté sur les figures) qui est prévu pour pénétrer dans le caisson et venir en appui contre la tige d'atterrisseur 1, et pénétrer au moins partiellement à l'intérieur de la partie tubulaire 3. On note que dans certains cas, la partie tubulaire 3 peut servir de piston d'amortisseur, le corps de l'amortisseur étant constitué dans le caisson. L'amortisseur permet d'amortir les mouvements de coulissement de la tige d'atterrisseur à l'intérieur du caisson d'atterrisseur.

Le caisson est prévu pour être assemblé à l'aéronef et la partie porte essieux 2 est prévue pour recevoir un mécanisme de support de roues d'atterrisseur. Ce mécanisme de support de roues d'atterrisseur n'est pas représenté sur les figures mais peut être constitué :
- soit de roulements montés autour de l'essieu 2d de la tige d'atterrisseur, comme dans le cas de la tige en T des figures 2a et 2b ou de la tige en T des figures 3a, 3b ;
- soit, dans le cas de la tige en Y des figures 1a, 1b, d'un bogie (non représenté sur les figures) destiné à porter plusieurs roues à l'aide d'au moins plusieurs essieux désaxés.

La tige d'atterrisseur des figures 1a et 1b (la figure 1a présente la tige en Y avant soudage et la figure 1b après soudage) est une tige en Y prévue pour porter un bogie doté d'une barre / balancier de bogie montée pivotante par rapport à la partie porte essieux de la tige en Y. Ce bogie, non représenté sur les figures, comporte plusieurs essieux dont les axes sont espacés entre eux pour porter respectivement au moins une paire de roues avant et au moins une paire de roues arrière.

Afin de réaliser une tige droite d'atterrisseur, conforme aux différents modes de réalisation de l'invention et réalisant une interface entre le caisson, l'amortisseur et le mécanisme de support de roues d'atterrisseur, on utilise un tube 3 constituant un fût, et une ou plusieurs pièces forgée ou moulées puis compactées à chaud 2a, 2b, 2c, 2d, 2e, 2f, 2g. Ces pièces 2a, 2b, 2c, 2d, 2e, 2f, 2g constituent la partie porte essieux 2. Ces pièces (forgées / matricées ou moulées et compactées à chaud) ont pour particularité d'avoir de petites longueurs, en regard de la longueur de la partie tubulaire 3. De telles pièces matricées 2a, 2b, 2c, 2d, 2e, 2f, 2g de la partie porte essieux 2 sont réalisables avec des moyens de matriçage ou compactage à chaud de tailles réduites par rapport aux moyens de matriçage qui sont nécessaires pour réaliser une tige d'atterrisseur en une seule pièce de taille équivalente, matricée ou moulée et compactée à chaud.

Comme on le verra par la suite, étant donné que la tige est réalisée en soudant plusieurs parties entre elle, les matériaux la composant peuvent être sélectionnés de manière à obtenir des caractéristiques optimales pour chaque zone de la tige 1.

Ainsi :
- le premier matériau de la partie tubulaire 3 est préférentiellement choisi dans un groupe de matériaux comprenant un alliage d'aluminium, un alliage de titane ; et
- le second matériau de la partie porte essieux forgée 2 est préférentiellement choisi dans un groupe de matériaux comprenant des aciers, des alliages d'aluminium ou de titane.

Le premier matériau de la partie tubulaire 3 est par conséquent choisi pour sa capacité à fléchir sans rompre et/ou pour sa légèreté et/ou pour sa capacité à ne pas flamber sous l'effet de l'impact d'atterrissage alors que le second matériau de la partie porte essieux 2 est choisi pour sa capacité de résistance à la traction et/ou à la compression et/ou à la corrosion.

Par exemple si l'on veut obtenir une tige d'atterrisseur légère et ayant une importante résistance à la corrosion, le premier matériau sera un alliage d'aluminium qui est léger et le second matériau un alliage de titane peu sensible à la corrosion.

A ce sujet, on note que la zone de la tige d'atterrisseur qui est la plus sensible à la corrosion est située au niveau de la partie porte essieux 2 qui est la plus proche du sol et par conséquent la plus susceptible de recevoir des projections de produits chimiques tels que des dégivrants de piste ou des impacts de pièces présentes sur le sol comme des pierres.

L'invention permet également de jouer sur l'orientation des fibres de la tige.

Ainsi, comme la partie tubulaire 3 est préférentiellement réalisée par extrusion d'un premier matériau selon un axe d'extrusion, on oriente les fibres de la partie tubulaire 3 parallèlement entre elles et à l'axe longitudinal X-X. La partie tubulaire 3 ainsi obtenue possède une capacité de flexion accrue tout en ayant un risque de rupture au choc réduit par rapport à une pièce forgée. De plus, comme la partie porte essieux 2 est soudée en bout de la partie tubulaire 3, les fibres de la partie tubulaire 3 sont alors orientées dans un même sens par rapport à cette partie porte essieux forgée 2. Le travail de conception d'une tige d'atterrisseur résistante est ainsi facilité puisque l'on connait exactement l'orientation des fibres de la partie tubulaire 3 à l'endroit de sa zone de contact avec la pièce porte essieux 2. Ceci ne serait pas le cas si la tige était réalisée d'une seule pièce matricée puisque le matriçage aurait pour effet de dévier au moins les fibres superficielles de la tige.

Selon l'invention, les géométries respectives de la partie porte essieux 2 et de la partie tubulaire 3 peuvent être prévues pour qu'à l'endroit de la zone de contact Z entre la partie tubulaire 3 et la partie porte essieux 2, la majorité des fibres (tant les fibres de la partie tubulaire 3 que les fibres de la partie porte essieux 2 au niveau de la zone de contact) avant soudage :
- viennent, comme sur la figure 1a, tangenter des lignes de directions parallèles à l'axe longitudinal X-X de la partie tubulaire 3 ; ou
- viennent, comme sur les figures 2a, 3a, tangenter des lignes de directions perpendiculaires à l'axe longitudinal X-X de la partie tubulaire 3.

On note que l'extrusion du premier matériau formant la partie tubulaire 3 est généralement réalisée en poussant ce matériau à l'état ductile au travers d'une filière et de manière à former simultanément une zone creuse à l'intérieure du premier matériau lors de son extrusion. La partie tubulaire 3 est produite par simple extrusion sans avoir à aléser une pièce forgée pour former le tube. On économise ainsi une opération d'alésage de pièce forgée jusqu'alors particulièrement couteuse en temps et en matière.

Dans le mode de réalisation de la tige en Y des figures 1a et 1b, la partie porte essieux 2 porte deux excroissances 2a, 2b s'étendant parallèlement entre elles et parallèlement à l'axe longitudinal X-X de la partie tubulaire 3.

Ces excroissances 2a, 2b qui sont en forme de plaques sont espacées l'une de l'autre pour former lorsqu'assemblées une fourchette en Y visible à la figure 1b.

Chaque excroissance 2a, 2b présente un alésage propre 6a, 6b s'étendant selon un axe transversal Z-Z perpendiculaire à l'axe longitudinal X-X de la partie tubulaire 3.

Comme indiqué précédemment, cette fourchette en Y permet le montage en chape d'une barre balancier du mécanisme de support de roues de l'atterrisseur, en l'occurrence un bogie. Cette barre balancier passe entre les excroissances 2b, 2c et pivote selon un pivot transversal (non visible sur les figures) s'étendant, selon l'axe transversal Z-Z, à l'intérieur des alésages 6a, 6b des excroissances 2b, 2c.

La tige d'atterrisseur 1 en Y est ainsi formée :
- d'une partie porte essieux 2 en forme de fourchette en Y et comprenant au moins une pièce forgée 2a, et préférentiellement trois pièces forgées 2a, 2b, 2c ; et
- d'une partie tubulaire 3 en matériau métallique soudée à cette pièce forgée 2a de la partie porte essieux 2.

On note que pour former la fourchette en Y on peut, conformément à l'exemple de la figure 1a, utiliser
- une portion centrale 2a de la partie porte essieux 2 qui est soudée à la partie tubulaire 3 ; et
- de deux portions latérales 2b, 2c respectivement soudées à la portion centrale 2a de manière à former les excroissances de la partie porte essieux forgée 2a.

Ces portions latérales 2b, 2c sont préférentiellement soudées à la portion centrale 2a par soudage par friction.

Alternativement à ce mode de réalisation de cette figure 1a, la partie porte essieux en forme de fourchette Y peut être formée par forgeage d'une seule pièce monobloc. Pour cela on crée par matriçage d'un bloc métallique présentant une zone destinée à être soudée à la partie tubulaire et deux zones destinées à former les excroissances 2b, 2c. Alternativement, ce bloc métallique peut être réalisé par moulage puis compactage isostatique à chaud avant d'être soudé à la partie tubulaire.

On note aussi que la soudure 4 par friction de la partie tubulaire 3 avec la partie porte essieux 2a est préférentiellement réalisée par mise en rotation relative de la partie porte essieux 2a et de la partie tubulaire 3. La soudure des pièces 2b et 2c sur la pièce 2a est réalisée après la soudure 4.

On note aussi que la soudure par friction de la portion centrale 2a de la fourchette (figure 1b) avec les portions latérales 2b, 2c respectives peut être une soudure par friction linéaire.

L'avantage des soudures par friction est qu'elles créent une diffusion atomique à l'interface entre les parties soudées, la qualité de la liaison ainsi obtenue est supérieure à celle des matériaux utilisés. Il n'y a pas besoin de métal d'apport ce qui permet de souder des matériaux différents. Les soudures utilisées pour réaliser la tige selon l'invention et mettre en oeuvre le procédé de l'invention sont préférentiellement par friction inertielle, linéaire ou orbitale permettant de conserver les propriétés des matériaux forgés et les propriétés du matériau formant la partie tubulaire devant recevoir l'amortisseur.

A titre d'illustration, un atterrisseur comportant une tige d'atterrisseur en fourchette pour le montage en chape d'une barre balancier est présenté sur le document brevet GB 2474686. Sur ce document, la tige d'atterrisseur porte un mécanisme de support de roues qui est un bogie dont la barre balancier pivote selon un pivot transversal passant par les alésages des excroissances. La tige de cet atterrisseur de l'art antérieur est en une seule pièce et pourrait avantageusement être remplacée par la tige d'atterrisseur de la figure 1b.

Dans le mode de réalisation de la tige des figures 2a et 2b (la figure 2a présente la tige en T avant soudage et la figure 2b après soudage), la partie porte essieux 2 possède aussi deux excroissances latérales. Mais dans ce cas, ces excroissances forment des essieux 5a, 5b s'étendant respectivement selon un axe d'essieux Y-Y. Ces essieux 5a, 5b s'étendent de part et d'autre d'un axe longitudinal X-X de la partie tubulaire 3 et l'axe d'essieux Y-Y est perpendiculaire à l'axe longitudinal X-X de manière que la tige d'atterrisseur 1 soit en forme de T.

Dans ce mode de réalisation des figures 2a, 2b, les essieux 5a, 5b font partie intégrante de la partie porte essieux forgée 2 est sont donc des excroissances forgées de cette partie porte essieux. On a ici une continuité structurelle du matériau entre les essieux 5a, 5b et la partie porte essieux 2. On limite ainsi le risque de rupture de la liaison entre la partie porte essieux 2 et les essieux 5a, 5b puisqu'ils sont le résultat du travail par forgeage d'un seul bloc métallique.

Idéalement, comme on le voit sur la figure 2a, la partie porte essieux 2 est réalisée avec un seul axe forgé qui peut être plein ou creux. La portion centrale de cet axe d'essieux 2d est soudée préférentiellement par friction linéaire avec la partie tubulaire 3.

Deux couronnes 2e, 2f sont respectivement soudées concentriquement autour de l'axe 2d de la partie porte essieux 2. Ces couronnes 2e, 2f sont réparties symétriquement de part et d'autre de l'axe X-X et forment des couronnes de fixation des stators de freins de l'atterrisseur.

Ces couronnes ou collerettes de frein 2e, 2f sont préférentiellement soudées par friction inertielle sur la barre porte essieux. Des perçages sont réalisés au travers de ces couronnes pour le passage de goujons de fixation des freins.

Dans un mode alternatif, non représenté sur les figures, on peut aussi imaginer que les essieux soient formés par une barre transversale distincte de la partie porte essieux 2, cette barre transversale étant par exemple emmanchée dans un alésage formé dans la partie porte essieux et s'étendant selon l'axe d'essieux perpendiculaire à l'axe longitudinal de la partie tubulaire.

Un autre mode de réalisation de tige en T est présenté aux figures 3a et 3b. Sur ce mode, la tige comporte :
- une portion centrale 2g de la partie porte essieux 2 qui est soudée à la partie tubulaire 3 ; et
- deux portions latérales tubulaires 2h, 2i respectivement soudées à la portion centrale 2a de manière à former des essieux droit et gauche 5a, 5b de la partie porte essieux 2 ; et
- deux disques annulaires 2e et 2f similaires à ceux de la figure 2b (chaque disque 2e et 2f respectif est soudé à un des essieux respectifs 2h, 2i de la tige. Ces disques 2e et 2f permettent chacun de fixer un frein correspondant).

La portion centrale 2g peut être réalisée par forgeage ou moulage / compactage isostatique à chaud. Les essieux 2h, 2i sont des tubes formés par extrusion ou moulage et compactage à chaud ou éventuellement par forgeage. Ces essieux 2h, 2i sont soudés à la portion centrale 2g par friction orbitale. Ce mode de réalisation permet une réduction de la taille des pièces formant la tige, puisque contrairement au mode de la figure 2b, ici la partie porte essieux 2 a une longueur réduite et est formée de deux petits essieux soudés à une portion centrale 2g. Avec ce mode, on peut réaliser la partie tubulaire 3 et les essieux 2h, 2i à l'aide de profilés tubulaires standards extrudés ou filés et la portion centrale 2g étant une des seules pièces forgées ou moulées et compactées, car elle est la partie de la tige 1 soumise aux contraintes d'usage les plus fortes. Avec ce mode de réalisation, on évite d'avoir à réaliser des essieux tubulaires 2h, 2i en alésant des pièces forgées.

## Revendications

1. Tige d'atterrisseur (1) pour aéronef, comportant une partie tubulaire (3) pour recevoir un amortisseur et une partie porte essieux (2) située en bout de la partie tubulaire (3) et adaptée à recevoir un mécanisme de support de roues d'atterrisseur, la partie tubulaire (3) et la partie porte essieux (2) étant reliées entre elles par au moins une soudure (4), **caractérisée en ce que** la partie tubulaire (3) et la partie porte essieux (2) sont réalisées en des matériaux métalliques distincts l'un de l'autre, la partie tubulaire (3) étant en un premier matériau métallique et la partie porte essieux (2) étant en un second matériau métallique.

2. Tige d'atterrisseur selon la revendication 1, dans laquelle ledit second matériau est un matériau forgé ou un matériau moulé et compacté par compaction isostatique à chaud.

3. Tige d'atterrisseur selon l'une quelconque des revendications 1 ou 2, dans laquelle la partie porte essieux (2) possède deux excroissances latérales (5a, 5b) formant des essieux s'étendant respectivement selon un axe d'essieux (Y-Y), ces essieux (5a, 5b) s'étendent de part et d'autre d'un axe longitudinal (X-X) de la partie tubulaire (3) et l'axe d'essieux (Y-Y) étant perpendiculaire à l'axe longitudinal (X-X) de la partie tubulaire de manière à ce que la tige d'atterrisseur (1) soit en forme de T.

4. Tige d`atterrisseur (1) selon l'une quelconque des revendications 1 ou 2, dans laquelle la partie porte essieux (2) porte deux excroissances (2b, 2c) s'étendant parallèlement entre elles et à un axe longitudinal (X-X) de la partie tubulaire (3), ces excroissances (2b, 2c) étant espacées l'une de l'autre pour former une fourchette et présentant chacune un alésage (6a, 6b) s'étendant selon une axe transversal (Z-Z) perpendiculaire à l'axe longitudinal (X-X) de la partie tubulaire (3).

5. Tige d'atterrisseur (1) selon la revendication 4, dans laquelle la partie porte essieux (2) est constituée à partir :
- d'une portion centrale de la partie porte essieux qui est soudée à la partie tubulaire (3) ; et
- de deux portions latérales respectivement soudées à la portion centrale de manière à former les ex-croissances (2b, 2c) de la partie porte essieux (2).

6. Tige d'atterrisseur selon l'une quelconque des revendications précédentes, dans laquelle la soudure (4) est une soudure par friction de la partie porte essieux (2) avec la partie tubulaire (3).

7. Tige d'atterrisseur selon l'une quelconque des revendications précédentes, dans laquelle la partie tubulaire (3) est une partie extrudée.

8. Tige d'atterrisseur selon l'une quelconque des revendications précédentes, dans laquelle :
- le premier matériau de la partie tubulaire (3) est choisi dans un groupe de matériaux comprenant au moins un alliage d'aluminium, au moins un alliage de titane ; et
- le second matériau de la partie porte essieux (2) est choisi dans un groupe de matériaux comprenant des aciers, des alliages de titane.

9. Atterrisseur comportant une tige d'atterrisseur (1) selon l'une quelconque des revendications précédentes et comportant en outre un amortisseur télescopique au moins partiellement disposé à l'intérieur de la partie tubulaire de la tige et des roues chacune respectivement portée sur un des essieux respectifs portés par la partie porte essieux.

10. Aéronef **caractérisé en ce qu'**il comporte au moins un atterrisseur selon la revendication précédente.

11. Procédé de fabrication d'une tige d'atterrisseur (1) pour aéronef, dans lequel, par une opération de soudure on relie entre elles :
- une partie tubulaire (3) adaptée pour recevoir un amortisseur de l'atterrisseur ; avec
- une partie porte essieux (2) adaptée à recevoir un mécanisme de support de roues d'atterrisseur,
la partie tubulaire (3) et la partie porte essieux (2) étant respectivement réalisées en des premier et second matériaux métalliques respectivement distincts l'un de l'autre, la partie porte essieux (2) étant préférentiellement réalisée par forgeage ou par compactage isostatique à chaud d'une pièce moulée.

## Patentansprüche

1. Fahrwerkstrebe (1) für ein Luftfahrzeug, umfassend einen rohrförmigen Teil (3) zur Aufnahme eines Stoßdämpfers und einen die Radachsen tragenden Teil (2), der sich am Ende des rohrförmigen Teils (3) befindet und daran angepasst ist, einen Mechanismus zum Tragen der Fahrwerkräder aufzunehmen, wobei der rohrförmige Teil (3) und der die Radachsen tragende Teil (2) miteinander über mindestens eine Schweißverbindung (4) verbunden sind, **dadurch gekennzeichnet, dass** der rohrförmige Teil (3) und der die Radachsen tragende Teil (2) aus voneinander verschiedenen metallischen Materialien gebildet sind, wobei das rohrförmige Teil (3) aus einem ersten metallischen Material und der die Radachsen tragende Teil (2) aus einem zweiten metallischen Material ist.

2. Fahrwerkstrebe nach Anspruch 1, wobei das genannte zweite Material ein Schmiedematerial oder ein durch heißisostatisches Pressen verdichtetes Formmaterial ist.

3. Fahrwerkstrebe nach einem der Ansprüche 1 oder 2, wobei der die Radachsen tragende Teil (2) zwei seitliche Vorsprünge (5a, 5b) besitzt, die Radachsen bilden, die sich jeweils gemäß einer Radachsenachse (Y-Y) erstrecken, wobei sich diese Radachsen (5a, 5b) zu beiden Seiten einer Längsachse (X-X) des rohrförmigen Teils (3) erstrecken und die Radachsenachse (Y-Y) senkrecht zur Längsachse (X-X) des rohrförmigen Teils ist, sodass die Fahrwerkstrebe (1) eine T-Form hat.

4. Fahrwerkstrebe (1) nach einem der Ansprüche 1 oder 2, wobei der die Radachsen tragende Teil (2) zwei Vorsprünge (2b, 2c) trägt, die sich parallel zueinander und zu einer Längsachse (X-X) des rohrförmigen Teils (3) erstrecken, wobei diese Vorsprünge (2b, 2c) zueinander beabstandet sind, um eine Gabel zu bilden, und jeweils eine Bohrung (6a, 6b) aufweisen, die sich gemäß einer Querachse (Z-Z) erstreckt, die senkrecht zur Längsachse (X-X) des rohrförmigen Teils (3) ist.

5. Fahrwerkstrebe (1) nach Anspruch 4, wobei der die Radachsen tragende Teil (2) gebildet ist aus:
- einem zentralen Abschnitt des die Radachsen tragenden Teils, der mit dem rohrförmigen Teil (3) verschweißt ist; und
- zwei seitlichen Abschnitten, die jeweils mit dem zentralen Teil derart verschweißt sind, dass die Vorsprünge (2b, 2c) des die Radachsen tragenden Teils (2) gebildet werden.

6. Fahrwerkstrebe nach einem der vorhergehenden Ansprüche, wobei die Schweißverbindung (4) eine Reibschweißverbindung zum Verschweißen des die Radachsen tragenden Teils (2) mit dem rohrförmigen Teil (3) ist.

7. Fahrwerkstrebe nach einem der vorhergehenden Ansprüche, wobei der rohrförmige Teil (3) ein extrudiertes Teil ist.

8. Fahrwerkstrebe nach einem der vorhergehenden Ansprüche, wobei:
- das erste Material des rohrförmigen Teils (3) aus einer Gruppe von Materialien ausgewählt ist, die mindestens eine Aluminiumlegierung und mindestens eine Titanlegierung umfasst; und
- das zweite Material des die Radachsen tragenden Teils (2) aus einer Gruppe von Materialien ausgewählt ist, die Stähle und Titanlegierungen umfasst.

9. Fahrwerk, umfassend eine Fahrwerkstrebe (1) nach einem der vorhergehenden Ansprüche und ferner umfassend einen Teleskopstoßdämpfer, der zumindest teilweise im Inneren des rohrförmigen Teils der Strebe angeordnet ist, sowie Räder, die jeweils auf einer der jeweiligen Radachsen getragen werden, die von dem die Radachsen tragenden Teil getragen werden.

10. Luftfahrzeug, **dadurch gekennzeichnet, dass** es mindestens ein Fahrwerk nach dem vorhergehenden Anspruch umfasst.

11. Verfahren zum Herstellen einer Fahrwerkstrebe (1) für ein Luftfahrzeug, wobei man durch einen Schweißvorgang miteinander verbindet:
- einen rohrförmigen Teil (3), der daran angepasst ist, einen Stoßdämpfer des Fahrwerks aufzunehmen; mit
- einem die Radachsen tragenden Teil (2), der daran angepasst ist, einen Mechanismus zum Tragen von Fahrwerkrädern aufzunehmen,
wobei der rohrförmige Teil (3) und der die Radachsen tragende Teil (2) aus einem ersten bzw. einem zweiten metallischen Material hergestellt sind, die jeweils voneinander verschieden sind, wobei der die Radachsen tragende Teil (2) vorzugsweise durch Schmieden oder durch heißisostatisches Pressen eines Formteils hergestellt wird.

## Claims

1. A landing gear rod (1) for an aircraft, the rod comprising a tubular portion (3) for receiving a shock absorber and an axle-carrier portion (2) situated at the end of the tubular portion (3) and adapted to receive a landing gear wheel support mechanism, the tubular portion (3) and the axle-carrier portion (2) being connected together by at least one weld (4), the rod being **characterized in that** the tubular portion (3) and the axle-carrier portion (2) are made of mutually distinct metal materials, the tubular portion (3) being made of a first metal material and the axle-carrier portion (2) being made of one second metal material.

2. A landing gear rod according to claim 1, wherein said second material is a forged material or a material that has been molded and pressed by hot isostatic pressing.

3. A landing gear rod according to claim 1 or claim 2, wherein the axle-carrier portion (2) possesses two lateral projections (5a, 5b) forming axles that both extend along an axle axis (Y-Y), these axles (5a, 5b) extending on either side of a longitudinal axis (X-X) of the tubular portion (3), and the axle axis (Y-Y) being perpendicular to the longitudinal axis (X-X) of the tubular portion so that the landing gear rod (1) is T-shaped.

4. A landing gear rod (1) according to claim 1 or claim 2, wherein the axle-carrier portion (2) carries two projections (2b, 2c) extending parallel to each other and to a longitudinal axis (X-X) of the tubular portion (3), these projections (2b, 2c) being spaced apart from each other to form a fork and each presenting a bore (6a, 6b) extending along a transverse axis (Z-Z) perpendicular to the longitudinal axis (X-X) of the tubular portion (3).

5. A landing gear rod (1) according to claim 4, wherein the axle-carrier portion (2) is constituted by:
• a central portion of the axle-carrier portion that is welded to the tubular portion (3); and
• two lateral portions respectively welded to the central portion so as to form the projections (2b, 2c) of the axle-carrier portion (2).

6. A landing gear rod according to any preceding claim, wherein the weld (4) is a friction weld connecting together the axle-carrier portion (2) and the tubular portion (3).

7. A landing gear rod according to any preceding claim, wherein the tubular portion (3) is an extruded portion.

8. A landing gear rod according to any preceding claim, wherein:
• the first material of the tubular portion (3) is selected from a group of materials comprising at least an aluminum alloy and at least a titanium alloy; and
• the second material of the axle-carrier portion (2) is selected from a group of materials comprising steels, and titanium alloys.

9. Landing gear including a landing gear rod (1) according to any preceding claim, and further including a telescopic shock absorber arranged at least in part inside the tubular portion of the rod, and wheels each carried by a respective one of the axles carried by the axle-carrier portion.

10. An aircraft, **characterized in that** it includes at least one piece of landing gear according to the preceding claim.

11. A method of fabricating a landing gear rod (1) for an aircraft, wherein a welding operation is used to connect together:
• a tubular portion (3) adapted to receive a shock absorber of the landing gear; and
• an axle-carrier portion (2) adapted to receive a landing gear wheel support mechanism;
the tubular portion (3) and the axle-carrier portion (2) being made of respective first and second mutually distinct metal materials, the axle-carrier portion (2) preferably being made by forging or by isostatic hot pressing a molded part.
